# EUROPÄISCHE PATENTSCHRIFT

(11) **EP 3 747 095 B1**
(45) Veröffentlichungstag und Bekanntmachung des Hinweises auf die Patenterteilung: **17.11.2021**
(21) Anmeldenummer: 19716806.5
(22) Anmeldetag: 26.03.2019
(51) Int. Cl.: H02B 11/26, H01H 9/10, H01H 33/66, H01H 85/54, H02B 11/12

(54) **BEWEGLICHE SICHERUNGSHALTERUNG**
MOVABLE FUSE HOLDER
SUPPORT DE FUSIBLE MOBILE

(30) Priorität: 29.03.2018 DE 102018204847
(43) Veröffentlichungstag der Anmeldung: 09.12.2020
(73) Patentinhaber: Siemens Aktiengesellschaft, 80333 München (DE)
(72) Erfinder: KARADENIZ, Tahsin, 41400 Gebze-Kocaeli (TR); CEKIC, Seckin, 34947 Istanbul (TR); ÖZTÜRK, Eyüp Serdar, 34718 Istanbul (TR)
(86) Internationale Anmeldenummer: PCT/EP2019/057575
(87) Internationale Veröffentlichungsnummer: WO 2019/185623

(56) Entgegenhaltungen:
- DE-A1- 10 049 009
- DE-B3-102007 041 958
- DE-B3-102007 041 963

## Beschreibung

Die Erfindung bezieht sich auf eine Schaltanlage mit einer beweglich an einem Leistungs- und/oder Lastschalter angeordnete Sicherungshalterung.

Bei Schaltanlagen aus dem Stand der Technik sind Sicherungen für hohe Ströme aus Platzgründen im schwer zugänglichen Kabelabteil, auch Kabelraum oder Cable-Compartment, oder an schwer zugänglichen Bereichen des Schaltgeräteabteils, auch Switch Device Compartment, angeordnet ist.

Die Patentdokumente DE 100 49 009 A1, DE 10 2007 041958 B3 und DE 10 2007 041963 B3 gehören zum technischen Hintergrund der vorliegenden Erfindung.

Aufgabe der Erfindung ist es, die Nachteile des Stands der Technik zu beheben und eine verbesserte Sicherungshalterung und eine verbesserte Schaltanlage mit einer verbesserten Sicherungshalterung bereitzustellen.

Diese Aufgabe wird durch den unabhängigen Anspruch 1 und den von diesem abhängigen Ansprüchen gelöst.

Ein Ausführungsbeispiel der Schaltanlage besitzt eine Sicherungshalterung für einen Leistungsschalter und/oder Lastschalter der Schaltanlage, wobei
- der Leistungsschalter und/oder Lastschalter ein Vakuumschalter mit einer oder mehr Vakuumschaltröhren ist, der in einem Schaltgeräteabteil der Schaltanlage zwischen einer Betriebsstellung und einer Teststellung bewegbar oder verschiebbar angeordnet ist,
- die Sicherungshalterung derart an dem Leistungsschalter und/oder Lastschalter angeordnet ist,
∘ dass ein erster Kontakt der Sicherungshalterung mit einem ersten Kontaktarm des Leistungsschalters und/oder Lastschalters elektrisch unterbrechbar verbunden ist und dass ein zweiter Kontakt der Sicherungshalterung mit einem Polanschluss elektrisch unterbrechbar verbunden ist,
- dass die Sicherungshalterung durch einen ersten Anschlag in dem Schaltgeräteabteil beim Überführen des Leistungsschalters und/oder Lastschalters von der Teststellung in die Betriebsstellung derart bewegbar ist, dass der erste Kontakt der Sicherungshalterung mit dem ersten Kontaktarm des Leistungsschalters und/oder Lastschalters elektrisch leitend verbunden ist und dass der zweite Kontakt der Sicherungshalterung mit dem Polanschluss elektrisch leitend verbunden ist, und
- dass die Sicherungshalterung durch einen zweiten Anschlag in dem Schaltgeräteabteil beim Überführen des Leistungsschalters und/oder Lastschalters von der Betriebsstellung in die Teststellung derart bewegbar ist, dass der erste Kontakt der Sicherungshalterung mit dem ersten Kontaktarm des Leistungsschalters und/oder Lastschalters nicht elektrisch leitend verbunden ist und dass der zweite Kontakt der Sicherungshalterung mit dem Polanschluss nicht elektrisch leitend verbunden ist.

Die Sicherungshalterung kann dabei aus einer einfachen Sicherungshalterung bestehen oder die Sicherungshalterung kann die Aufnahme von mehreren Sicherungen ermöglichen, die jeweils eine Phase eines mehrphasigen Leistungsschalters und/oder Lastschalters absichern, also die Sicherungen jeweils einer Phase zugeordnet sind und sich in dem Strompfad der jeweiligen Phase befinden. Alternativ können auch je Phase eines mehrphasigen Leistungsschalters und/oder Lastschalters einzelne Sicherungshalterungen vorgesehen sein.

Elektrisch unterbrechbar ist dabei so zu verstehen, dass die elektrische Verbindung zwischen Sicherungshalterung und Kontaktarm und/oder Polanschluss unterbrochen wird. Die Unterbrechung erfolgt durch eine Bewegung der Sicherungshalterung relativ zum Kontaktarm und Polanschluss, also relativ zum Leistungsschalter und/oder Lastschalter.

Unter bewegbar ist im Zusammenhang mit der Sicherungshalterung insbesondere eine Translationsbewegung und/oder Rotationsbewegung der Sicherungshalterung zu verstehen. Die Rotation und/oder Translation kann bevorzugt in der horizontalen Ebene oder vertikalen Ebene der Kontaktarme stattfinden.

Die Begriffe Kontaktarm und Polanschluss sind hier so zu verstehen, dass sie nicht zwingend auf den Kontaktarm und einen Polanschluss beschränkt sind, sondern für Abschnitte auf einer Seite des beweglich angeordneten Leistungsschalters und/oder Lastschalters stehen, wo Sicherungen in der beweglich angeordneten Sicherungshalterung in den Strompfad des Leistungsschalters und/oder Lastschalters einfügbar sind. Möglich ist also auch, dass beide Kontakte der Sicherungshalterung mit dem ersten Kontaktarm verbunden sind oder dass beide Kontakte der Sicherungshalterung mit dem Polanschluss verbunden sind.

Die Sicherungshalterung ist bei diesem Aufbau also bevorzugt in dem Strompfad eines Kontaktarms und/oder eines Polanschlusses des Leistungsschalters und/oder Lastschalters angeordnet. Bei einem mehrphasigen Leistungsschalter und/oder Lastschalter ist die Sicherungshalterung bevorzugt derart angeordnet, dass jeweils eine oder mehr Sicherungen im Strompfad jeder Phase des Leistungsschalters und/oder Lastschalters in der oder den Sicherungshalterungen angeordnet sind oder anordnenbar sind.

Bevorzugt wird, dass die Sicherungshalterung gleitend gelagert ist. Insbesondere wird bevorzugt, dass die Sicherungshalterung auf einem Schienensystem gleitend angeordnet ist. Auch wird bevorzugt, dass die Sicherungshalterung oberhalb des Leistungsschalters und/oder Lastschalters angeordnet ist. Das bewirkt eine optimale Zugänglichkeit von Leistungsschalter und Sicherungen in der Sicherungshalterung.

Alternativ kann die Sicherungshalterung auch seitlich versetzt neben und/oder auf Höhe des ersten Kontaktarms und/oder des Polanschlusses angeordnet sein.

Weiter wird bevorzugt, dass der Polanschluss ein Polkopfanschluss ist.

Auch wird bevorzugt, dass die Sicherungshalterung in der Betriebsposition derart gehalten wird, dass der erste Kontakt der Sicherungshalterung mit dem erste Kontaktarm des Leistungsschalters und/oder Lastschalters elektrisch leitend verbunden ist und dass der zweite Kontakt der Sicherungshalterung mit dem Polanschluss elektrisch leitend verbunden ist und eine ausreichende Kraft auf den Sicherungsschalter wirken muss, um diesen aus der elektrisch leitend verbundenen Position zu bewegen.

Ausreichende Kräfte bedeutet in dem Zusammenhang mit der Beschreibung, dass die ausreichenden Kräfte größer sind als die im Betrieb, insbesondere Normalbetrieb und im Störfall, zu erwartenden Kräfte, die in einer Schaltanlage auf die Sicherungshalterung wirken. Insbesondere wird bevorzugt, dass die ausreichenden Kräfte durch einen Einrastmechanismus erzeugt werden und so eine sichere Positionierung der Sicherungshalterung in der Betriebsstellung gewährleistet wird.

Bevorzugt wird auch, dass die Sicherungshalterung in der Testposition derart gehalten wird, dass der erste Kontakt der Sicherungshalterung mit dem erste Kontaktarm des Leistungsschalters und/oder Lastschalters nicht elektrisch leitend verbunden ist und dass der zweite Kontakt der Sicherungshalterung mit dem Polanschluss nicht elektrisch leitend verbunden ist und eine ausreichende Kraft auf den Sicherungsschalter wirken muss, um diesen aus der nicht elektrisch leitend verbundenen Position zu bewegen.

Ausreichende Kräfte bedeutet in dem Zusammenhang mit der Beschreibung, dass die ausreichenden Kräfte größer sind als die im Betrieb, insbesondere Normalbetrieb und im Störfall, zu erwartenden Kräfte, die in einer Schaltanlage auf die Sicherungshalterung wirken. Insbesondere wird bevorzugt, dass die ausreichenden Kräfte durch einen weiteren Einrastmechanismus erzeugt werden und so eine sichere Positionierung der Sicherungshalterung in der Teststellung gewährleistet wird.

Der zweite Anschlag verhindert, dass die Sicherungshalterung mit der Tür des Schaltgeräteabteils, HV-Abteils, kollidieren kann.

Auch wird bevorzugt, dass der erste Anschlag und der zweite Anschlag fest in dem Schaltgeräteabteil der Schaltanlage angeordnet sind.

Bevorzugt wird auch, dass der erste Anschlag und der zweite Anschlag oder nur der zweite Anschlag derart beweglich in dem Schaltgeräteabteil angeordnet sind oder ist, dass der zweite Anschlag so verschiebbar oder abklappbar ausgestaltet ist, dass die Sicherungshalterung mit dem Leistungsschalter und/oder Lastschalter aus dem Schaltgeräteabteil bewegbar ist. Das ermöglicht ein Entfernen des Leistungsschalters und/oder Lastschalters aus dem Schaltgeräteabteil, ohne den zweiten Anschlag, oder bei verbundem ersten Anschlag und zweiten Anschlag den ersten Anschlag und den zweiten Anschlag, ausbauen zu müssen.

Weiter wird bevorzugt, dass der Leistungsschalter und/oder Lastschalter auf einem Wagen oder Auszugselement bewegbar anordnenbar ist.

Die Erfindung wird im Folgenden beispielhaft anhand von Figuren erläutert.
- Figur 1:: Schematische Darstellung eines Leistungsschalters und/oder Lastschalters mit einer erfindungsgemäßen Sicherungshalterung;
- Figur 2:: Schematische Darstellung einer beispielhaften Schaltanlage mit einem Leistungsschalter und/oder Lastschalter mit einer erfindungsgemäßen Sicherungshalterung in einer Betriebsstellung;
- Figur 3:: Schematische Darstellung einer beispielhaften Schaltanlage mit einem Leistungsschalter und/oder Lastschalter mit einer erfindungsgemäßen Sicherungshalterung in einer Teststellung;
- Figur 4:: Schematische Darstellung eines beispielhaften Leistungsschalters und/oder Lastschalters mit einer erfindungsgemäßen Sicherungshalterung in einer Betriebsstellung;
- Figur 5:: Schematische Darstellung eines beispielhaften Leistungsschalters und/oder Lastschalters mit einer erfindungsgemäßen Sicherungshalterung in einer Teststellung;

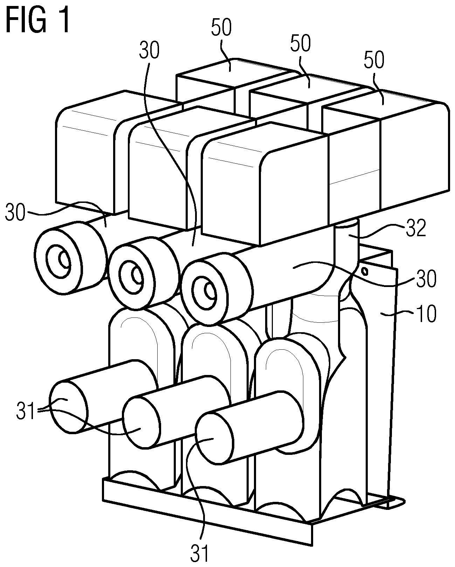

Die Figur 1 zeigt eine schematische Darstellung eines dreiphasigen Leistungsschalters und/oder Lastschalters 10 mit drei erfindungsgemäßen Sicherungshalterungen 50. Die Sicherungshalterungen 50 sind in der Figur 1 unabhängig voneinander, das heißt nicht direkt miteinander verbunden und unabhängig voneinander beweglich auf dem Leistungsschalter und/oder Lastschalter 10 angeordnet, dargestellt.

Optional und hier nicht dargestellt können zwei oder alle drei der Sicherungshalterungen 50 mechanisch miteinander verbunden sein, so dass die zwei oder alle drei der Sicherungshalterungen 50 gemeinsam beweglich auf dem Leistungsschalter und/oder Lastschalter 10 angeordnet sind. Ebenfalls nicht dargestellt sind die Sicherungen 55, die in den Sicherungshalterungen 50 angeordnenbar sind.

Der dreiphasige Leistungsschalter und/oder Lastschalter 10 verfügt über drei erste Kontaktarme 30 und drei zweite Kontaktarme 31, über die der Leistungsschalter und/oder Lastschalter 10 mit den weiteren Komponenten der hier nicht dargestellten Schaltanlage 1 verbunden wird. Die Sicherungshalterungen 50 sind in der Figur 1 auf einem Polanschluss 32, hier ein Polkopfanschluss, angeordnet, also über dem Leistungsschalter und/oder Lastschalter 10.

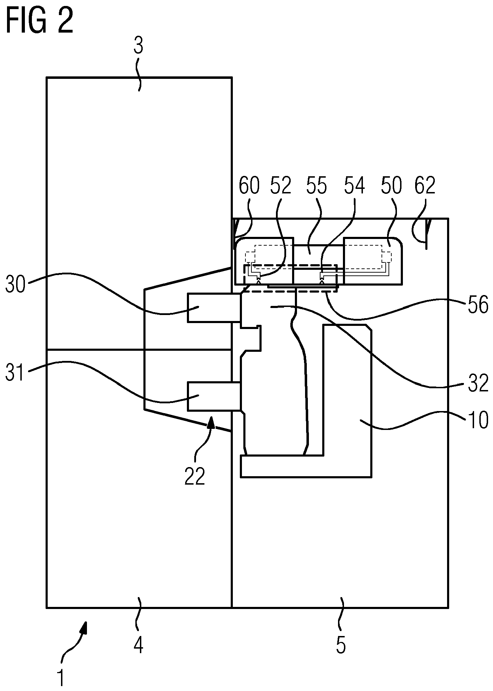

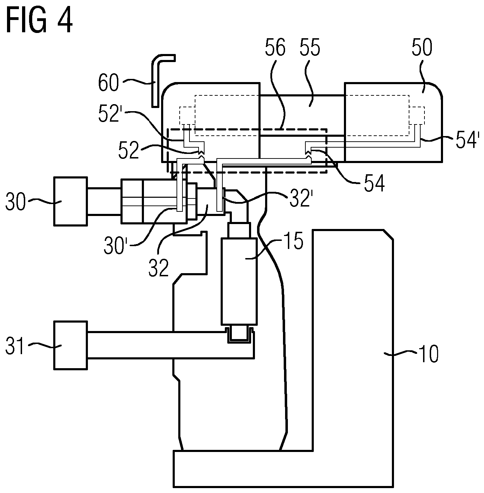

Die Figur 2 zeigt eine schematische Darstellung einer beispielhaften Schaltanlage 1 mit einem Leistungsschalter und/oder Lastschalter 10 mit einer erfindungsgemäßen Sicherungshalterung 50 mit einer Sicherung 55 in einer Betriebsstellung 22, in der sich die Sicherungshalterung 50 in einer elektrisch leitend verbundenen Position 56 befindet, in der erste Kontakt 52 der Sicherungshalterung 50 elektrisch leitend mit dem ersten Kontaktarm 30 verbunden ist und der zweite Kontakt 54 der Sicherungshalterung 50 elektrisch leitend mit dem Polanschluss 32 verbunden ist. Der erste Kontaktarm 30 und der zweite Kontaktarm 31 sind in der in Figur 2 gezeigten Betriebsstellung 22 mit den korrespondierenden Anschlüssen der Schaltanlage 1 elektrisch verbunden. Zwischen dem ersten Kontaktarm 30 und dem zweite Kontaktarm 31 ist eine in der Figur 2 nicht gezeigte Vakuumschaltröhre 15, vergleiche Figur 4, angeordnet. Der erste Kontaktarm 30 und der zweite Kontaktarm 31 fügen in der Betriebsstellung 22 die nicht gezeigte Vakuumschaltröhre 15 in den Strompfad der Schaltanlage 1 elektrisch ein. Die in der Figur 2 gezeigte Schaltanlage 1 besteht hier beispielhaft aus einem Stromschienenabteil 3, auch Busbarabteil, einem Kabelabteil 4 und einem Schaltgeräteabteil 5.

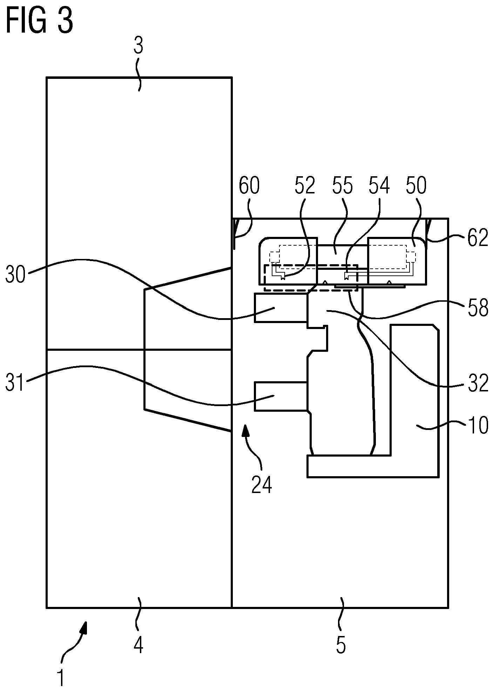

Wird der Leistungsschalter und/oder Lastschalter 10 aus der Teststellung 24 der Figur 3 in die Betriebsstellung 22 bewegt, so wird durch den ersten Anschlag 60 für die Sicherungshalterung 50 die Sicherungshalterung 50 derart bewegt, dass der erste Kontakt 52 der Sicherungshalterung 50 mit dem ersten Kontaktarm 30 des Leistungsschalters und/oder Lastschalters 10 elektrisch leitend verbunden ist und dass der zweite Kontakt 54 der Sicherungshalterung 50 mit dem Polanschluss 32 elektrisch leitend verbunden ist. Die Sicherungshalterung 50 wird durch den ersten Anschlag 60 also in die elektrisch leitend verbundenen Position 56 versetzt. Das ist dadurch erkenntlich, dass die Leiter der Sicherungshalterung 50 und die Leiter am erster Kontaktarm 30 und am Polanschluss 32 sich gegenseitig kontaktieren.

Der zweite Anschlag 62 für die Sicherungshalterung 50 ist in der Figur 2 ebenso wie der erste Anschlag 60 der Sicherungshalterung 50 im Innenraum des Schaltgeräteabteils 5 der Schaltanlage 1 angeordnet und befestigt.

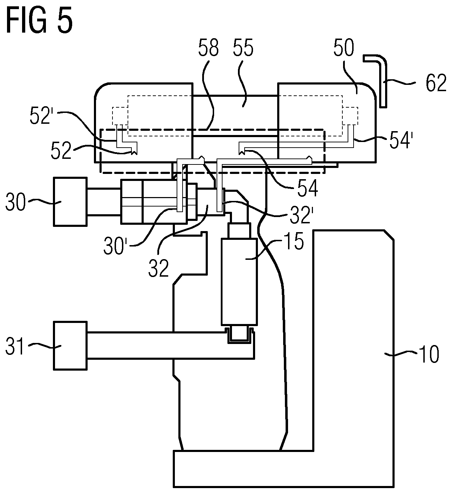

Die Figur 3 zeigt eine schematische Darstellung einer beispielhaften Schaltanlage 1 mit einem Leistungsschalter und/oder Lastschalter 10 mit einer erfindungsgemäßen Sicherungshalterung 50 mit einer Sicherung 55 in einer Teststellung 24, in der sich die Sicherungshalterung 50 in einer nicht elektrisch leitend verbundenen Position 58 befindet, in der erste Kontakt 52 der Sicherungshalterung 50 nicht elektrisch leitend mit dem ersten Kontaktarm 30 verbunden ist und der zweite Kontakt 54 der Sicherungshalterung 50 nicht elektrisch leitend mit dem Polanschluss 32 verbunden ist. Der erste Kontaktarm 30 und der zweite Kontaktarm 31 sind in der in Figur 3 gezeigten Teststellung 24 mit den korrespondierenden Anschlüssen der Schaltanlage 1 nicht elektrisch verbunden. Zwischen dem ersten Kontaktarm 30 und dem zweite Kontaktarm 31 ist eine in der Figur 3 nicht gezeigte Vakuumschaltröhre 15, vergleiche Figur 5, angeordnet. Der erste Kontaktarm 30 und der zweite Kontaktarm 31 fügen in der Teststellung 22 die nicht gezeigte Vakuumschaltröhre 15 nicht in den Strompfad der Schaltanlage 1 elektrisch ein. Die in der Figur 3 gezeigte Schaltanlage 1 besteht hier beispielhaft aus einem Stromschienenabteil 3, auch Busbarabteil, einem Kabelabteil 4 und einem Schaltgeräteabteil 5.

Wird der Leistungsschalter und/oder Lastschalter 10 aus der Betriebsstellung 22 der Figur 2 in die Teststellung 24 der Figur 3 bewegt, so wird durch den zweiten Anschlag 62 für die Sicherungshalterung 50 die Sicherungshalterung 50 derart bewegt, dass der erste Kontakt 52 der Sicherungshalterung 50 nicht mit dem ersten Kontaktarm 30 des Leistungsschalters und/oder Lastschalters 10 elektrisch leitend verbunden ist und dass der zweite Kontakt 54 der Sicherungshalterung 50 nicht mit dem Polanschluss 32 elektrisch leitend verbunden ist. Die Sicherungshalterung 50 wird durch den zweiten Anschlag 62 also in die elektrisch nicht leitend verbundenen Position 58 versetzt. Das ist dadurch erkenntlich, dass die Leiter der Sicherungshalterung und die Leiter am erster Kontaktarm 30 und am Polanschluss 32 sich nicht gegenseitig kontaktieren.

Der erste Anschlag 60 für die Sicherungshalterung 50 ist in der Figur 3 ebenso wie der zweite Anschlag 62 der Sicherungshalterung 50 im Innenraum des Schaltgeräteabteils 5 der Schaltanlage 1 angeordnet und befestigt.

Die Figur 4 zeigt eine schematische Darstellung eines beispielhaften Leistungsschalters und/oder Lastschalters 10 mit einer erfindungsgemäßen Sicherungshalterung 50 mit einer Sicherung 55 in eine elektrisch leitend verbundenen Position 56 versetzt, in der erste Kontakt 52 der Sicherungshalterung 50 elektrisch leitend mit dem ersten Kontaktarm 30 verbunden ist und der zweite Kontakt 54 der Sicherungshalterung 50 elektrisch leitend mit dem Polanschluss 32 verbunden ist. Der erste Kontaktarm 30 und der zweite Kontaktarm 31 sind in der in Figur 2 gezeigten Betriebsstellung 22 mit den korrespondierenden Anschlüssen der Schaltanlage 1 elektrisch verbunden. Zwischen dem ersten Kontaktarm 30 und dem zweite Kontaktarm 31 ist eine Vakuumschaltröhre 15 angeordnet.

Wird der Leistungsschalter und/oder Lastschalter 10 aus der Teststellung 24 der Figur 3 in die Betriebsstellung 22 der Figur 2 bewegt, so wird durch den ersten Anschlag 60 für die Sicherungshalterung 50 die Sicherungshalterung 50 derart bewegt, dass der erste Kontakt 52 der Sicherungshalterung 50 mit dem ersten Kontaktarm 30 des Leistungsschalters und/oder Lastschalters 10 elektrisch leitend verbunden ist und dass der zweite Kontakt 54 der Sicherungshalterung 50 mit dem Polanschluss 32 elektrisch leitend verbunden ist. Die Sicherungshalterung 50 wird durch den ersten Anschlag 60 also in die elektrisch leitend verbundenen Position 56 versetzt. Das ist dadurch erkenntlich, dass die Kontaktleiter 52', 54' der Sicherungshalterung 50 und die Schalterleiter 30', 32' am erster Kontaktarm 30 und am Polanschluss 32 sich gegenseitig kontaktieren, also elektrisch lösbar verbunden sind. Somit besteht eine elektrische Verbindung zwischen dem Kontaktleiter 52' und dem Schalterleiter 30', sowie dem Kontaktleiter 54' und dem Schalterleiter 32'.

Die Figur 5 zeigt eine schematische Darstellung einem beispielhaften Leistungsschalter und/oder Lastschalter 10 mit einer erfindungsgemäßen Sicherungshalterung 50 mit einer Sicherung 55 in einer nicht elektrisch leitend verbundenen Position 58, in der erste Kontakt 52 der Sicherungshalterung 50 nicht elektrisch leitend mit dem ersten Kontaktarm 30 verbunden ist und der zweite Kontakt 54 der Sicherungshalterung 50 nicht elektrisch leitend mit dem Polanschluss 32 verbunden ist. Der erste Kontaktarm 30 und der zweite Kontaktarm 31 sind in der in Figur 5 gezeigten nicht elektrisch leitend verbundenen Position 58 mit den korrespondierenden Anschlüssen der Schaltanlage 1 nicht elektrisch verbunden. Zwischen dem ersten Kontaktarm 30 und dem zweite Kontaktarm 31 ist eine Vakuumschaltröhre 15 angeordnet. Der erste Kontaktarm 30 und der zweite Kontaktarm 31 fügen in der nicht elektrisch leitend verbundenen Position 58 die Vakuumschaltröhre 15 nicht in den Strompfad der Schaltanlage 1 elektrisch ein. Wird der Leistungsschalter und/oder Lastschalter 10 aus der Betriebsstellung 22 der Figur 2 in die Teststellung 24 der Figur 3 bewegt, so wird durch den zweiten Anschlag 62 für die Sicherungshalterung 50 die Sicherungshalterung 50 derart bewegt, dass der erste Kontakt 52 der Sicherungshalterung 50 nicht mit dem ersten Kontaktarm 30 des Leistungsschalters und/oder Lastschalters 10 elektrisch leitend verbunden ist und dass der zweite Kontakt 54 der Sicherungshalterung 50 nicht mit dem Polanschluss 32 elektrisch leitend verbunden ist. Die Sicherungshalterung 50 wird durch den zweiten Anschlag 62 also in die elektrisch nicht leitend verbundenen Position 58 versetzt. Das ist dadurch erkenntlich, dass die Kontaktleiter 52', 54' der Sicherungshalterung 50 und die Schalterleiter 30', 32' am erster Kontaktarm 30 und am Polanschluss 32 sich nicht gegenseitig kontaktieren, also keine elektrische Verbindung zwischen dem Kontaktleiter 52' und dem Schalterleiter 30', sowie dem Kontaktleiter 54' und dem Schalterleiter 32' besteht.

### Bezugszeichenliste

- 1: Schaltanlage;
- 3: Stromschienenabteil (Busbarabteil) einer Schaltanlage 1;
- 4: Kabelabteil einer Schaltanlage 1;
- 5: Schaltgeräteabteil einer Schaltanlage 1;
- 10: Leistungsschalter und/oder Lastschalter;
- 15: Vakuumschaltröhre;
- 22: Betriebsstellung;
- 24: Teststellung;
- 30: erster Kontaktarm;
- 30': Schalterleiter des ersten Kontaktarms 30;
- 31: zweiter Kontaktarm;
- 32: Polanschluss;
- 32': Schalterleiter des Polanschlusses 32;
- 50: Sicherungshalterung;
- 52: erster Kontakt der Sicherungshalterung 50;
- 52': Kontaktleiter des ersten Kontakts 52;
- 54: zweiter Kontakt der Sicherungshalterung 50;
- 54': Kontaktleiter des zweiten Kontakts;
- 55: Sicherung;
- 56: elektrisch leitend verbundenen Position der Sicherungshalterung 50;
- 58: elektrisch nicht leitend verbundenen Position der Sicherungshalterung 50;
- 60: erster Anschlag für die Sicherungshalterung 50;
- 62: zweiter Anschlag für die Sicherungshalterung 50;

## Patentansprüche

1. Schaltanlage (1) mit mindestens einem Stromschienenabteil (3), einem Kabelabteil (4) und einen Schaltgeräteabteil (5) mit einem Leistungs- und/oder Lastschalter (10), wobei das Schaltgeräteabteil (5) eine oder mehrere Sicherungshalterungen (50) aufweist, wobei der Leistungsschalter und/oder Lastschalter (10) im Schaltgeräteabteil (5) zwischen einer Betriebsstellung (22) und einer Teststellung (24) bewegbar oder verschiebbar angeordnet ist, **dadurch gekennzeichnet**, das s
• der Leistungsschalter und/oder Lastschalter (10) ein Vakuumschalter mit einer oder mehr Vakuumschaltröhren (15) ist,
• die Sicherungshalterung (50) derart an dem Leistungsschalter und/oder Lastschalter (10) angeordnet ist,
o dass ein erster Kontakt (52) der Sicherungshalterung (50) mit einem ersten Kontaktarm (30) des Leistungsschalters und/oder Lastschalters (10) elektrisch unterbrechbar verbunden ist und
o dass ein zweiter Kontakt (54) der Sicherungshalterung (50) mit einem Polanschluss (32) elektrisch unterbrechbar verbunden ist,
• dass die Sicherungshalterung (50) durch einen ersten Anschlag (60) in dem Schaltgeräteabteil (5) beim Überführen des Leistungsschalters und/oder Lastschalters (10) von der Teststellung (24) in die Betriebsstellung (22) derart bewegbar ist, dass der erste Kontakt (52) der Sicherungshalterung (50) mit dem ersten Kontaktarm (30) des Leistungsschalters und/oder Lastschalters (10) elektrisch leitend verbunden ist und dass der zweite Kontakt (54) der Sicherungshalterung (50) mit dem Polanschluss (32) elektrisch leitend verbunden ist, und
• dass die Sicherungshalterung (50) durch einen zweiten Anschlag (62) in dem Schaltgeräteabteil (5) beim Überführen des Leistungsschalters und/oder Lastschalters (10) von der Betriebsstellung (22) in die Teststellung (24) derart bewegbar ist, dass der erste Kontakt (52) der Sicherungshalterung (50) mit dem ersten Kontaktarm (30) des Leistungsschalters und/oder Lastschalters (10) nicht elektrisch leitend verbunden ist und dass der zweite Kontakt (54) der Sicherungshalterung (50) mit dem Polanschluss (32) nicht elektrisch leitend verbunden ist.

2. Schaltanlage (1) nach Anspruch 1, **dadurch gekennzeichnet**, das s die Sicherungshalterung (50) gleitend gelagert ist.

3. Schaltanlage (1) nach einem der vorstehenden Ansprüche, **dadurch gekennzeichnet**, das s die Sicherungshalterung (50) oberhalb des Leistungsschalters und/oder Lastschalters (10) angeordnet ist.

4. Schaltanlage (1) nach einem der vorstehenden Ansprüche, **dadurch gekennzeichnet, dass** der Polanschluss (32) ein Polkopfanschluss ist.

5. Schaltanlage (1) nach einem der vorstehenden Ansprüche, **dadurch gekennzeichnet, dass** die Sicherungshalterung (50) in der Betriebsposition (22) derart gehalten wird, dass der erste Kontakt (52) der Sicherungshalterung (50) mit dem erste Kontaktarm (30) des Leistungsschalters und/oder Lastschalters (10) elektrisch leitend verbunden ist und dass der zweite Kontakt (54) der Sicherungshalterung (50) mit dem Polanschluss (32) elektrisch leitend verbunden ist und eine ausreichende Kraft auf den Sicherungsschalter (50) wirken muss, um diesen aus der elektrisch leitend verbundenen Position (56) zu bewegen.

6. Schaltanlage (1) nach einem der vorstehenden Ansprüche, **dadurch gekennzeichnet, dass** die Sicherungshalterung (50) in der Testposition (24) derart gehalten wird, dass der erste Kontakt (52) der Sicherungshalterung (50) mit dem erste Kontaktarm (30) des Leistungsschalters und/oder Lastschalters (10) nicht elektrisch leitend verbunden ist und dass der zweite Kontakt (54) der Sicherungshalterung (50) mit dem Polanschluss (32) nicht elektrisch leitend verbunden ist und eine ausreichende Kraft auf den Sicherungsschalter (50) wirken muss, um diesen aus der nicht elektrisch leitend verbundenen Position (58) zu bewegen.

7. Schaltanlage (1) nach einem der vorstehenden Ansprüche, **dadurch gekennzeichnet, dass** der erste Anschlag (60) und der zweite Anschlag (62) fest in dem Schaltgeräteabteil (5) angeordnet sind.

8. Schaltanlage (1) nach einem der Ansprüche 1 bis 6, **dadurch gekennzeichnet, dass** der erste Anschlag (60) und der zweite Anschlag (62) oder nur der zweite Anschlag (62) derart beweglich in dem Schaltgeräteabteil (5) angeordnet ist, dass der zweite Anschlag (62) so verschiebbar oder abklappbar ausgestaltet ist, dass die Sicherungshalterung (50) mit dem Leistungsschalter und/oder Lastschalter (10) aus dem Schaltgeräteabteil (5) bewegbar ist.

9. Schaltanlage (1) nach einem der vorstehenden Ansprüche, **dadurch gekennzeichnet, dass** Leistungsschalter und/oder Lastschalter (10) auf einem Wagen oder Auszugselement bewegbar anordnenbar ist.

## Claims

1. Switchgear assembly (1) having at least one busbar compartment (3), a cable compartment (4) and a switching-device compartment (5) having a circuit breaker and/or load break switch (10), wherein the switching-device compartment (5) has one or more fuse holders (50), wherein the circuit breaker and/or load break switch (10) is arranged in the switching-device compartment (5) so as to be movable or shiftable between an operating position (22) and a test position (24),
**characterized in that**
• the circuit breaker and/or load break switch (10) is a vacuum switch having one or more vacuum interrupters (15),
• the fuse holder (50) is arranged on the circuit breaker and/or load break switch (10) in such a way
∘ that a first contact (52) of the fuse holder (50) is connected to a first contact arm (30) of the circuit breaker and/or load break switch (10) in an electrically interruptible manner, and
o that a second contact (54) of the fuse holder (50) is connected to a pole terminal (32) in an electrically interruptible manner,
• **in that**, when the circuit breaker and/or load break switch (10) is transferred from the test position (24) into the operating position (22), the fuse holder (50) is movable by a first stop (60) in the switching-device compartment (5) such that the first contact (52) of the fuse holder (50) is connected to the first contact arm (30) of the circuit breaker and/or load break switch (10) in an electrically conductive manner, and such that the second contact (54) of the fuse holder (50) is connected to the pole terminal (32) in an electrically conductive manner, and
• **in that**, when the circuit breaker and/or load break switch (10) is transferred from the operating position (22) into the test position (24), the fuse holder (50) is movable by a second stop (62) in the switching-device compartment (5) such that the first contact (52) of the fuse holder (50) is connected to the first contact arm (30) of the circuit breaker and/or load break switch (10) in a non-electrically conductive manner, and such that the second contact (54) of the fuse holder (50) is connected to the pole terminal (32) in a non-electrically conductive manner.

2. Switchgear assembly (1) according to Claim 1, **characterized in that** the fuse holder (50) is mounted in a sliding manner.

3. Switchgear assembly (1) according to either of the preceding claims,
**characterized in that** the fuse holder (50) is arranged above the circuit breaker and/or load break switch (10).

4. Switchgear assembly (1) according to one of the preceding claims,
**characterized in that** the pole terminal (32) is a pole head terminal.

5. Switchgear assembly (1) according to one of the preceding claims,
**characterized in that** the fuse holder (50) is held in the operating position (22) such that the first contact (52) of the fuse holder (50) is connected to the first contact arm (30) of the circuit breaker and/or load break switch (10) in an electrically conductive manner, and such that the second contact (54) of the fuse holder (50) is connected to the pole terminal (32) in an electrically conductive manner, and a sufficient force has to act on the fuse holder (50) in order to move the latter out of the position (56) connected in an electrically conductive manner.

6. Switchgear assembly (1) according to one of the preceding claims,
**characterized in that** the fuse holder (50) is held in the test position (24) such that the first contact (52) of the fuse holder (50) is connected to the first contact arm (30) of the circuit breaker and/or load break switch (10) in a non-electrically conductive manner, and such that the second contact (54) of the fuse holder (50) is connected to the pole terminal (32) in a non-electrically conductive manner, and a sufficient force has to act on the fuse holder (50) in order to move the latter out of the position (58) connected in a non-electrically conductive manner.

7. Switchgear assembly (1) according to one of the preceding claims,
**characterized in that** the first stop (60) and the second stop (62) are arranged securely in the switching-device compartment (5) .

8. Switchgear assembly (1) according to one of Claims 1 to 6,
**characterized in that** the first stop (60) and the second stop (62) or only the second stop (62) is/are arranged in a movable manner in the switching-device compartment (5) such that the second stop (62) is configured in such a shiftable or foldable manner that the fuse holder (50) is movable out of the switching-device compartment (5) with the circuit breaker and/or load break switch (10).

9. Switchgear assembly (1) according to one of the preceding claims,
**characterized in that** the circuit breaker and/or load break switch (10) is able to be arranged in a movable manner on a carriage or pull-out element.

## Revendications

1. Installation (1) de distribution comprenant au moins un compartiment (3) de rail de courant, un compartiment (4) de câble et un compartiment (5) d'appareils de coupure comprenant un disjoncteur (10) et/ou un interrupteur à coupure en charge, dans lequel le compartiment (5) d'appareils de coupure a une ou plusieurs fixations (5) de fusible, dans lequel le disjoncteur et/ou l'interrupteur à coupure en charge (10) est monté mobile ou coulissant dans le compartiment (5) d'appareils de coupure entre une position (22) de fonctionnement et une position (24) de test,
**caractérisée en ce que**
• le disjoncteur et/ou l'interrupteur (10) en charge est un interrupteur à vide ayant un ou plusieurs tubes (15) interrupteurs à vide,
• la fixation (50) de fusible est montée sur le disjoncteur et/ou sur l'interrupteur (10) à coupure en charge de manière à ce que,
o un premier contact (52) de la fixation (50) de fusible soit relié avec possibilité d'interruption électriquement à un premier bras (30) de contact du disjoncteur et/ou de l'interrupteur à coupure en charge et
o un deuxième contact (54) de la fixation (50) de fusible soit relié avec possibilité d'interruption électriquement à une borne (32) de pôle,
• **en ce que** la fixation (50) de fusible soit mobile par une première butée (60) dans le compartiment (50) d'appareils de coupure lorsque le disjoncteur et/ou l'interrupteur (10) de coupure en charge passe de la position (24) de test à la position (22) de fonctionnement de manière à ce que le premier contact (52) de la fixation (50) de fusible soit relié d'une manière conductrice de l'électricité au premier bras (30) de contact du disjoncteur et/ou de l'interrupteur (10) à coupure en charge et de manière à ce que le deuxième contact (54) de la fixation (50) de fusible soit relié d'une manière conductrice de l'électricité à la borne (30) de pôle, et
• **en ce que** la fixation (50) de fusible soit mobile par une deuxième butée (62) dans le compartiment (5) d'appareils de coupure lors du passage du disjoncteur et/ou de l'interrupteur (10) de coupure en charge de la position (22) de fonctionnement à la position (24) de test de manière à ce que le premier contact (52) de la fixation (50) de fusible ne soit pas relié d'une manière conductrice de l'électricité au premier bras (30) de contact du disjoncteur et/ou de l'interrupteur à coupure en charge et de manière à ce que le deuxième contact (54) de la fixation (50) de fusible ne soit pas relié d'une manière conductrice de l'électricité à la borne (32)de pôle.

2. Installation (1) de distribution suivant la revendication 1, **caractérisée en ce que** la fixation (50) de fusible est montée coulissante.

3. Installation (1) de distribution suivant l'une des revendications précédentes,
**caractérisée en ce que** la fixation (50) de fusible est montée au-dessus du disjoncteur et/ou de l'interrupteur (10) à coupure en charge.

4. Installation (1) de distribution suivant l'une des revendications précédentes,
**caractérisée en ce que** la borne (32) de pôle est une borne de tête de pôle.

5. Installation (1) de distribution suivant l'une des revendications précédentes,
**caractérisée en ce que** la fixation (50) de fusible est maintenue dans la position (22) de fonctionnement de manière à ce que le premier contact (52) de la fixation (50) de fusible soit relié d'une manière conductrice de l'électricité au premier bras (30) de contact du disjoncteur et/ou de l'interrupteur (10) à coupure en charge et de manière à ce que le deuxième contact (54) de la fixation (50) de fusible soit relié d'une manière conductrice de l'électricité à la borne (32) de pôle et de manière à ce qu'une force suffisante doive s'appliquer à l'interrupteur (50) à fusible pour mettre celui-ci hors de la position (56) reliée d'une manière conductrice de l'électricité.

6. Installation (1) de distribution suivant l'une des revendications précédentes,
**caractérisée en ce que** la fixation (50) de fusible est maintenue dans la position (24) de test de manière à ce que le premier contact (52) de la fixation (50) de fusible ne soit pas relié d'une manière conductrice de l'électricité au premier bras (30) de contact du disjoncteur et/ou de l'interrupteur (10) à coupure en charge et de manière à ce que le deuxième bras (54) de contact de la fixation (50) de fusible ne soit pas relié d'une manière conductrice de l'électricité à la borne (32) de pôle et de manière à ce qu'une force suffisante doive s'appliquer à l'interrupteur (50) à fusible pour mettre celui-ci hors de la position (58) non reliée d'une manière conductrice de l'électricité.

7. Installation (1) de distribution suivant l'une des revendications précédentes,
**caractérisée en ce que** la première butée (60) et la deuxième butée (62) sont montées fixes dans le compartiment (5) d'appareils de coupure.

8. Installation (1) de distribution suivant l'une des revendications 1 à 6,
**caractérisée en ce que** la première butée (60) et la deuxième butée (62) ou seulement la deuxième butée (62) sont montées mobiles dans le compartiment (5) d'appareils de coupure de manière à ce que la deuxième butée (62) soit conformée de manière à pouvoir coulisser ou être rabattue de façon à ce que la fixation (50) de fusible puisse avec le disjoncteur et/ou l'interrupteur (10) à coupure en charge être déplacée hors du compartiment (5) d'appareils de coupure.

9. Installation (1) de distribution suivant l'une des revendications précédentes,
**caractérisée en ce que** le disjoncteur et/ou l'interrupteur (10) à coupure en charge peut être monté mobile sur un chariot ou sur un élément d'extraction.
